# EUROPEAN PATENT APPLICATION

(11) **EP 4 834 493 A1**
(43) Date of publication of application: **04.11.2026**
(21) Application number: 24912716.8
(22) Date of filing: 23.12.2024
(51) Int. Cl.: B05D 1/36, B32B 37/24

(54) **METHOD FOR FORMING MULTILAYERED COATING FILM**

(30) Priority: 27.12.2023 JP 2023221531
(71) Applicant: Nippon Paint Automotive Coatings Co., Ltd., Hirakata-shi, Osaka 573-1153 (JP)
(72) Inventor: TAKEMURA, Kenta, Hirakata-shi, Osaka 573-1153 (JP); SENDA, Akiko, Hirakata-shi, Osaka 573-1153 (JP); NAGAI, Tomoki, Hirakata-shi, Osaka 573-1153 (JP); MARUYAMA, Keiko, Kurokawa-gun, Miyagi 981-3609 (JP); KAKIKURA, Takato, Kurokawa-gun, Miyagi 981-3609 (JP); OHTAKE, Yoshimasa, Toyota-shi, Aichi 471-8571 (JP); AMBO, Keiji, Toyota-shi, Aichi 471-8571 (JP)
(74) Representative: Mewburn Ellis LLP
(86) International application number: PCT/JP2024/045438
(87) International publication number: WO 2025/142829

(57) **Abstract**

A method for forming a multilayer coating film, including: applying a thermally curable intermediate coating composition (A) onto an article to be coated; applying a thermally curable and colored first clear coating composition (C1) using a dispenser after applying the intermediate coating composition (A); heat-curing the intermediate coating composition (A) to obtain an intermediate coating film; and heat-curing the first clear coating composition (C1) to obtain a colored first clear coating film, wherein the first clear coating composition (C1) is a solvent-based composition, and has a low-shear viscosity LSV of 1 Pa•s or more and 40 Pa•s or less as measured at a temperature of 23°C and a shear rate of 0.1 sec-1.

## Description

### TECHNICAL FIELD

The present invention relates to a method for forming a multilayer coating film.

### BACKGROUND ART

Conventionally, automobile bodies and parts are spray-coated. In spray coating, the coating material is atomized and flows together with air, and adheres to an article to be coated. Therefore, the coating efficiency of spray coating is low, and is generally said to be 50% to 70%.

In view of recent environmental problems, efforts to improve coating efficiency have been started. For example, Patent Documents 1 and 2 disclose apparatuses capable of applying a coating material in the form of droplets to automobile parts.

### PRIOR ART DOCUMENTS

### PATENT DOCUMENTS

Patent Document 1: JP-A-2016-144805
Patent Document 2: JP-A-2020-22965

### SUMMARY OF THE INVENTION

### PROBLEMS TO BE SOLVED BY THE INVENTION

When a coating material in the form of droplets is applied, sagging is prone to occur.

An object of the present invention is to provide a method for forming a multilayer coating film capable of inhibiting occurrence of sagging using dispensing application.

### SOLUTIONS TO THE PROBLEMS

To solve the problems described above, the present invention provides the embodiments described below.

The present disclosure includes the following embodiments.
[1] A method for forming a multilayer coating film, including:
   applying a thermally curable intermediate coating composition (A) onto an article to be coated;
   applying a thermally curable and colored first clear coating composition (C1) using a dispenser after applying the intermediate coating composition (A);
   heat-curing the intermediate coating composition (A) to obtain an intermediate coating film; and
   heat-curing the first clear coating composition (C1) to obtain a colored first clear coating film,
   wherein the first clear coating composition (C1) is a solvent-based composition, and has a low-shear viscosity LSV of 1 Pa•s or more and 40 Pa•s or less as measured at a temperature of 23°C and a shear rate of 0.1 sec-1.
[2] The method for forming a multilayer coating film according to the above [1], wherein the first clear coating composition (C1) is applied before the intermediate coating composition (A) is heat-cured, and
   heat-curing of the intermediate coating composition (A) and heat-curing of the first clear coating composition (C1) are conducted at a time.
[3] The method for forming a multilayer coating film according to the above [1], wherein the intermediate coating composition (A) is heat-cured to afford an intermediate coating film, and
   then the application of the first clear coating composition (C1) is conducted.
[4] The method for forming a multilayer coating film according to any one of the above [1] to [3], further including:
   applying a water-borne base coating composition (B) after applying the intermediate coating composition (A) and before applying the first clear coating composition (C1); and
   heat-curing the water-borne base coating composition (B) to obtain a base coating film.
[5] The method for forming a multilayer coating film according to any one of the above [1] to [4], further including:
   applying a water-borne base coating composition (B) after applying the intermediate coating composition (A) and before applying the first clear coating composition (C1);
   applying a second clear coating composition (C2) after applying the water-borne base coating composition (B) and before applying the first clear coating composition (C1); and
   heat-curing the second clear coating composition (C2) to obtain a second clear coating film.
[6] The method for forming a multilayer coating film according to any one of the above [1] to [4], further including:
   applying a second clear coating composition (C2) after applying the first clear coating composition (C1); and
   heat-curing the second clear coating composition (C2) to obtain a second clear coating film.
[7] The method for forming a multilayer coating film according to any one of the above [1] to [6], wherein the first clear coating composition (C1) has a high-shear viscosity HSV of 0.009 Pa•s or more and 0.40 Pa•s or less as measured at a temperature of 23°C and a shear rate of 1000 sec⁻¹.
[8] The method for forming a multilayer coating film according to any one of the above [1] to [7], wherein the first clear coating composition (C1) has a solid content concentration of 20% by mass or more and 60% by mass or less.
[9] The method for forming a multilayer coating film according to any one of the above [1] to [8], wherein a reduction rate of the solid content concentration attained after a lapse of 60 seconds from the application of the first clear coating composition (C1) is 10% by mass or less with respect to the solid content concentration of the first clear coating composition (C1).
[10] The method for forming a multilayer coating film according to any one of the above [1] to [9], wherein the dispenser has a nozzle having a diameter of 50 µm or more and 400 µm or less.
[11] The method for forming a multilayer coating film according to any one of the above [1] to [10], wherein the first clear coating composition (C1) includes at least one selected from the group consisting of a coloring pigment, a glitter pigment, and a dye.
[12] The method for forming a multilayer coating film according to any one of the above [1] to [11], wherein the first clear coating composition (C1) includes at least one selected from the group consisting of a polyamide-based viscosity agent, a cellulose-based viscosity agent, a polyolefin-based viscosity agent, a polyurea-based viscosity agent, and an organic resin microparticle viscosity agent.

### EFFECTS OF THE INVENTION

According to the present invention, there is provided a method for forming a multilayer coating film capable of inhibiting occurrence of sagging using a dispenser having high coating efficiency.

### BRIEF DESCRIPTION OF THE DRAWINGS

[Fig. 1] Fig. 1 is a flowchart showing a method for forming a multilayer coating film according to a first embodiment of the present disclosure.
[Fig. 2] Fig. 2 is a schematic cross-sectional view illustrating a multilayer coating film in the first embodiment of the present disclosure.
[Fig. 3] Fig. 3 is a flowchart showing a method for forming a multilayer coating film according to a second embodiment of the present disclosure.
[Fig. 4] Fig. 4 is a schematic cross-sectional view illustrating a multilayer coating film in the second embodiment of the present disclosure.
[Fig. 5] Fig. 5 is a flowchart showing a method for forming a multilayer coating film according to a third embodiment of the present disclosure.
[Fig. 6] Fig. 6 is a schematic cross-sectional view illustrating a multilayer coating film in the third embodiment of the present disclosure.
[Fig. 7] Fig. 7 is a flowchart showing a method for forming a multilayer coating film according to a fourth embodiment of the present disclosure.
[Fig. 8] Fig. 8 is a schematic cross-sectional view illustrating a multilayer coating film in the fourth embodiment of the present disclosure.
[Fig. 9] Fig. 9 is a flowchart showing a method for forming a multilayer coating film according to a fifth embodiment of the present disclosure.
[Fig. 10] Fig. 10 is a schematic cross-sectional view illustrating a multilayer coating film in the fifth embodiment of the present disclosure.
[Fig. 11] Fig. 11 is a flowchart showing a method for forming a multilayer coating film according to a sixth embodiment of the present disclosure.
[Fig. 12] Fig. 12 is a flowchart showing a method for forming a multilayer coating film according to a seventh embodiment of the present disclosure.
[Fig. 13] Fig. 13 is a flowchart showing a method for forming a multilayer coating film according to an eighth embodiment of the present disclosure.

### DETAILED DESCRIPTION

Coating using a dispenser (hereinafter referred to as dispensing application) is a method involving discharging a liquid coating composition in a fixed amount from a nozzle toward an article to be coated. In the dispensing application, the coating composition is discharged in a liquid form such as a droplet or a liquid column rather than in an atomized form. Therefore, the dispense coating has high coating efficiency, so that dust can be reduced as compared with conventional spray coating.

In the spray coating, when a coating composition is atomized, the contained solvent volatilizes to increase the solid content concentration, and the viscosity of the coating composition after discharge increases. Therefore, sagging hardly occurs. On the other hand, in the dispensing application, since a coating composition is discharged in a liquid state, sagging easily occurs. When a coating composition is prone to sag, it is necessary to perform coating a plurality of times, and thus coating workability deteriorates, or unevenness in film thickness occurs and appearance is deteriorated.

In the dispensing application, a coating composition is required to have a low viscosity before discharge in order to be discharged from a nozzle, and is required to have a high viscosity after discharge in order to prevent sagging. In the dispensing application, however, since a coating composition is discharged in a liquid state, the solid content concentration of the coating composition hardly changes before and after discharge. That is, when the coating composition is adjusted to have a solid content concentration suitable for discharge, the resulting viscosity is low, so that sagging is prone to occur.

Coating materials are generally non-Newtonian fluids. Non-Newtonian fluids such as coating materials (in particular thixotropic fluids) are changed in viscosity due to the shear rate applied at the time of discharge. In the case of dispensing application, in which the change in the solid content concentration of a coating composition before and after discharge is small, it has been found that control of the shear viscosity of a coating composition before discharge is important. Then, it has been found that by setting the low-shear viscosity LSV measured at a temperature of 23°C and a shear rate of 0.1 sec⁻¹ as a shear viscosity corresponding to the shear viscosity described above to 1 Pa•s or more and 40 Pa•s or less, it is possible to achieve both dischargeability suitable for dispensing application and inhibition of occurrence of sagging.

In dispensing application, a coating composition is usually discharged from a nozzle at a shear rate higher than a low shear rate of 0.1 sec⁻¹. Therefore, even if the low-shear viscosity LSV is increased as described above, the dischargeability is hardly affected.

Hereinafter, a multilayer coating film which is one aspect of the present disclosure will be described in detail with reference to illustrated embodiments. Note that the drawings include some schematic ones and may not reflect actual dimensions or proportions. The present disclosure is not limited to these embodiments.

### [First Embodiment]

The method for forming a multilayer coating film of the present embodiment includes: applying a thermally curable intermediate coating composition (A) onto an article to be coated; applying a thermally curable and colored first clear coating composition (C1) using a dispenser after applying the intermediate coating composition (A); heat-curing the intermediate coating composition (A) to obtain an intermediate coating film; and heat-curing the first clear coating composition (C1) to obtain a colored first clear coating film. The first clear coating composition (C1) is applied before the intermediate coating composition (A) is heat-cured, and heat-curing of the intermediate coating composition (A) and heat-curing of the first clear coating composition (C1) are conducted at a time (in the same step).

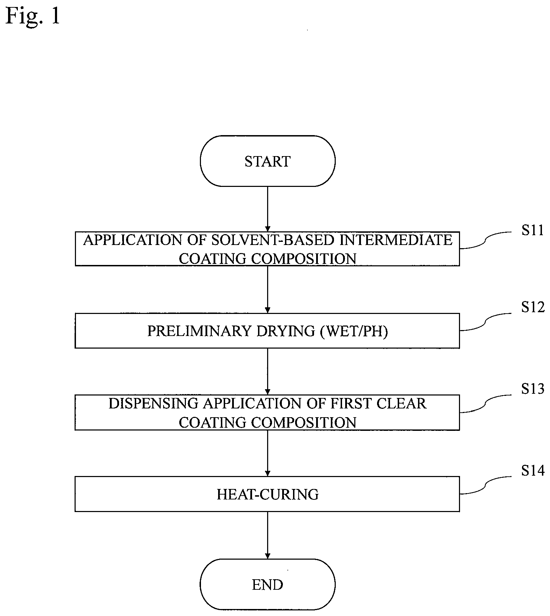

Fig. 1 is a flowchart showing one example of the method for forming a multilayer coating film according to the first embodiment. First, a thermally curable and solvent-based intermediate coating composition (A) is applied onto an article to be coated (S11), and then preliminary drying is performed (S12). Subsequently, a thermally curable and colored first clear coating composition (C1) is applied with a dispenser (S13). Thereafter, heating for curing ("heat-curing"; hereinafter also referred to as "baking") is performed (S14). Both the intermediate coating composition (A) (namely, an uncured intermediate coating film) and the first clear coating composition (C1) are cured by one baking treatment.

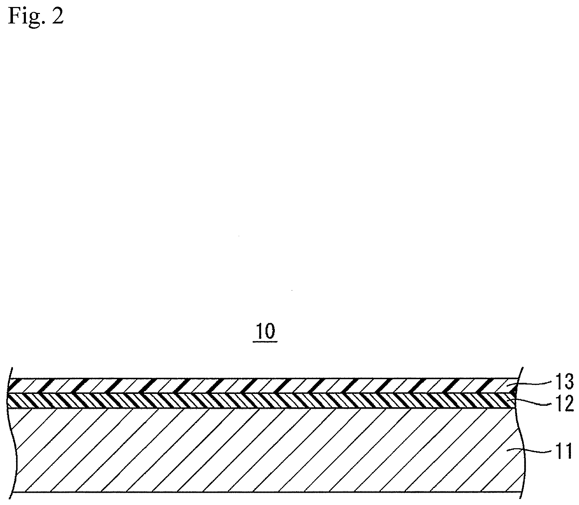

By the method of the first embodiment, a multilayer coating film including an intermediate coating film disposed on the article to be coated and a colored first clear coating film (hereinafter also referred to as "colored clear coating film") disposed on the intermediate coating film is formed. Fig. 2 is a schematic cross-sectional view illustrating the multilayer coating film 10 in the first embodiment. The multilayer coating film 10 includes an intermediate coating film 12 disposed on an article to be coated 11 and a colored clear coating film 13 disposed on the intermediate coating film 12.

First, the coating compositions to be used in the respective steps are described.

In the following, the weight average molecular weight Mw and the number average molecular weight Mn are measured with a polystyrene standard by GPC (gel permeation chromatography).

The hydroxyl value and the acid value are determined on the basis of the solid content mass. The hydroxyl value and the acid value can be measured by the publicly-known method described in JIS K 0070: 1992. The hydroxyl value and the acid value may be calculated from the blending amount of the unsaturated monomer in the monomer of the target resin.

The epoxy equivalent can be measured by the publicly-known method described in JIS K 7236: 2001.

The solid content of a coating composition is all components of the coating composition excluding volatile components (typically, a solvent). The solid content concentration of a coating composition can be calculated from the residue yielded when the coating composition is heated at 140°C in accordance with the determination of non-volatile matter content specified in JIS K 5601-1-2.

The thickness of a coating film can be measured with an electro-magnetic coating thickness meter (for example, SDM-miniR manufactured by SANKO). The thickness of a coating film is an average value of the thicknesses of the coating film at arbitrary five points.

### (First clear coating composition (C1))

The first clear coating composition (C1) is a solvent-based composition. The solvent-based coating composition includes an organic solvent as a solvent.

The first clear coating composition (C1) may be either a one-pack coating material or a multi-pack coating material such as a two-pack coating material including a base agent and a curing agent. The base agent and the curing agent constituting the two-pack coating material may be supplied to the nozzle after being mixed, or may be supplied to the same nozzle and mixed while being discharged.

The low-shear viscosity LSV of the first clear coating composition (C1) is 1 Pa•s or more and 40 Pa•s or less. Thanks to this, sagging of the first clear coating composition (C1) after discharge (after being applied to an article to be coated) is inhibited.

The low-shear viscosity LSV of the first clear coating composition (C1) may be 3 Pa•s or more, and may be 6 Pa•s or more. The low-shear viscosity LSV of the first clear coating composition (C1) may be 30 Pa•s or less, and may be 10 Pa•s or less.

The low-shear viscosity LSV of the first clear coating composition (C1) can affect the leveling property as well as the effect of inhibiting sagging (hereinafter sometimes referred to as "anti-sagging property"). When the low-shear viscosity LSV is in the above range, the leveling property of the first clear coating composition (C1) is easily exhibited.

The first clear coating composition (C1) may have a high-shear viscosity HSV of 0.005 Pa•s or more and 0.40 Pa•s or less as measured at a temperature of 23°C and a shear rate of 1000 sec⁻¹. The shear rate of 1000 sec⁻¹ is close to the shear rate to be applied at the time of discharge. When the high-shear viscosity HSV is set in the above range, the dischargeability is improved, and the first clear coating composition (C1) is easily applied uniformly without unevenness. The shear rate of 1000 sec⁻¹ is also suitable as a condition for evaluating the dischargeability because it is a rate at which a stable measurement value can be obtained.

The high-shear viscosity HSV of the first clear coating composition (C1) may be 0.008 Pa•s or more, may be 0.05 Pa•s or more, and may be 0.08 Pa•s or more. The high-shear viscosity HSV of the first clear coating composition (C1) may be 0.40 Pa•s or less, may be 0.20 or less, and may be 0.17 Pa•s or less.

From the viewpoint of easily achieving both inhibition of sagging and dischargeability, the low-shear viscosity LSV and the high-shear viscosity HSV may satisfy the following relationship.
(a) When 0.005 Pa•s ≤ HSV < 0.11 Pa•s, 1.0 Pa•s ≤ LSV ≤ 32.0 Pa•s.
(b) When 0.11 Pa•s< HSV ≤ 0.5 Pa•s, 4.0 Pa•s< LSV ≤ 40 Pa•s.
   In particular, when 0.005 Pa•s ≤ HSV < 0.11 Pa•s,
(c) 1.0 Pa•s ≤ LSV ≤ 4.0 Pa•s (especially, 1.0 Pa•s ≤ LSV < 3.0 Pa•s) may be satisfied.

From the viewpoint of easily achieving both inhibition of sagging and dischargeability, the index (LSV/HSV) obtained by dividing the low-shear viscosity LSV by the high-shear viscosity HSV may be 5 or more and 1200 or less. LSV/HSV may be 8 or more, and may be 10 or more. LSV/HSV may be 500 or less, may be 400 or less, and may be 350 or less.

The solid content concentration of the first clear coating composition (C1) may be 20% by mass or more and 60% by mass or less. When the solid content concentration of the first clear coating composition (C1) is 20% by mass or more, a colored clear coating film having a sufficient thickness can be formed even with a small application amount, and thus coating workability is improved. In addition, the low-shear viscosity LSV is easily adjusted to the above range. When the solid content concentration of the first clear coating composition (C1) is 60% by mass or less, the high-shear viscosity HSV is easily adjusted to the above range. The solid content concentration of the first clear coating composition (C1) may be 30% by mass or more, and may be 40% by mass or more. The solid content concentration of the first clear coating composition (C1) may be 57% by mass or less, and may be 50% by mass or less.

The amount of change in the solid content concentration of the first clear coating composition (C1) between before and after discharge is small. For example, the reduction rate of the solid content concentration attained after a lapse of 60 seconds from the application (discharge) of the first clear coating composition (C1) is 10% by mass or less with respect to the solid content concentration of the first clear coating composition (C1) before discharge. As described above, sagging of the first clear coating composition (C1) is inhibited even when the change in solid content concentration between before and after discharge is small. The reduction rate of the solid content concentration of the first clear coating composition (C1) may be 7% by mass or less, and may be 4% by mass or less. The reduction rate of the solid content concentration of the first clear coating composition (C1) may be 0.1% by mass or more.

The solid content concentration attained at a time 60 seconds after the application of the first clear coating composition (C1) (hereinafter, for convenience, that time may be referred to as "immediately after application") can be calculated as follows. The first clear coating composition (C1) is applied to an aluminum foil, the weight of which has been measured in advance, with a dispenser (for example, MDS 3200 manufactured by Vermes, nozzle diameter: 100 µm) such that the dry-film thickness is 15 µm. After 60 seconds from the application, the aluminum foil is folded, followed by measuring the mass of the aluminum foil while preventing drying, and then the aluminum foil is heated at 140°C. The mass W of the first clear coating composition (C1) before heating and the mass Wh of the non-volatile matter are calculated by subtracting the mass of only the aluminum foil from the masses of the samples before and after heating, respectively. Finally, the solid content concentration of the first clear coating composition (C1) immediately after the application is calculated from (Formula) 100 × Wh/W (% by mass).

The dischargeability can be evaluated, for example, by the degree of missing of the colored clear coating film or the degree of scattering of the first clear coating composition (C1). The missing of the coating film refers to a part that is not coated. In the dispensing application, the missing appears in a streak shape. The missing in the dispensing application occurs due to the fact that the first clear coating composition (C1) is not applied to a desired position, and indicates that the straightness of the first clear coating composition (C1) after discharge was low. The straightness of the first clear coating composition (C1) discharged is affected by the shear viscosity (corresponding to the high-shear viscosity HSV described above) of the first clear coating composition (C1) at the time of discharge. When the high-shear viscosity HSV is excessively large, straightness deteriorates. Here, when the low-shear viscosity LSV of the first clear coating composition (C1) is 1 Pa•s or more and 40 Pa•s or less, a slight missing can be eliminated by leveling of the coating composition.

The dischargeability can also be evaluated by the degree of scattering of the first clear coating composition (C1). Scattering of the first clear coating composition (C1) is caused by scattering of the first clear coating composition (C1) from a nozzle in unintended directions, and indicates that the first clear coating composition (C1) is applied to position other than a desired position. Scattering of the first clear coating composition (C1) in dispensing application is also affected by the shear viscosity (corresponding to the high-shear viscosity HSV described above) of the first clear coating composition (C1) at the time of discharge. When the high-shear viscosity HSV is excessively small, the first clear coating composition (C1) easily scatters.

Since the first clear coating composition (C1) is less prone to cause missing and scattering and is superior in dischargeability, the first clear coating composition (C1) is easily applied to a desired position using a dispenser. Therefore, masking is not required.

The first clear coating composition (C1) includes, for example, a coating film forming resin, an organic solvent, and at least one selected from the group consisting of a coloring pigment, a glitter pigment, and a dye. The first clear coating composition (C1) may further include a viscosity agent. The first clear coating composition (C1) may further include a surface conditioning agent.

### <<Coating film forming resin>>

The coating film forming resin is a thermally curable resin. Examples of the coating film forming resin include an acrylic resin, a polyester resin, a polyurethane resin, an alkyd resin, a fluororesin, a silicone resin, an epoxy resin, a polyether resin, and a polycarbonate resin. These are used singly or two or more of them are used in combination. The coating film forming resin has a crosslinkable functional group. Examples of the crosslinkable functional group include a carboxy group, a hydroxy group, an epoxy group, a silanol group, and a (meth)acryloyl group.

The first clear coating composition (C1) contains, for example, a half-ester acid group-containing acrylic resin (i), a carboxy group-containing polyester resin (ii), and an acrylic resin (iii) having a hydroxy group and an epoxy group as coating film forming resins. The three polymers listed above react with each other, and curing reactions proceed. The resin composition containing the above three polymers is referred to as an acid-epoxy curable resin composition.

### • Half-ester acid group-containing acrylic resin (i)

The acrylic resin (i) has an acid anhydride group half-esterified with a hydroxy group. The acrylic resin (i) is obtained, for example, by copolymerizing an ethylenically unsaturated monomer having an acid anhydride group with another ethylenically unsaturated monomer, and then half-esterifying the acid anhydride group with an alcohol compound having a low molecular weight.

Examples of the ethylenically unsaturated monomer having an acid anhydride group include maleic anhydride, itaconic anhydride, and citraconic anhydride. These are used singly or two or more of them are used in combination.

Examples of said another ethylenically unsaturated monomer include C₁ to C₂₄ alkyl esters of acrylic acid or methacrylic acid such as methyl (meth)acrylate, ethyl (meth)acrylate, propyl (meth)acrylate, n-butyl (meth)acrylate, isobutyl (meth)acrylate, t-butyl (meth)acrylate, 2-ethylhexyl (meth)acrylate, lauryl (meth)acrylate, and stearyl (meth)acrylate; vinyl aromatic compounds such as styrene, α-methylstyrene, and vinyltoluene; olefins such as ethylene and propylene; unsaturated nitriles such as acrylonitrile and methacrylonitrile; unsaturated amides such as acrylamide, methacrylamide, and N-methylacrylamide; and vinyl compounds such as vinyl acetate, vinyl chloride, 2-vinylpyridine, and 4-vinylpyridine. These are used singly or two or more of them are used in combination.

The acrylic resin (i) may have, for example, an acid value (AV) of 50 mg KOH/g or more and 200 mg KOH/g or less and a number average molecular weight (Mn) of 1000 or more and 10,000 or less.

### • Carboxy group-containing polyester resin (ii)

The polyester resin (ii) is obtained, for example, by an addition reaction between a polyester polyol having three or more hydroxy groups and a compound having an acid anhydride group.

The polyester resin (ii) may have, for example, an AV of 50 mg KOH/g or more and 200 mg KOH/g or less, an OHV of 5 mg KOH/g or more and 50 mg KOH/g or less, and an Mn of 400 or more and 3500 or less.

### • Acrylic resin having hydroxy group and epoxy group (iii)

The acrylic resin (iii) is obtained, for example, by copolymerizing an epoxy group-containing ethylenically unsaturated monomer and a hydroxy group-containing ethylenically unsaturated monomer. The acrylic resin (iii) may have two or more epoxy groups on average.

Examples of the epoxy group-containing ethylenically unsaturated monomer include glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether. These are used singly or two or more of them are used in combination.

Examples of the hydroxy group-containing ethylenically unsaturated monomer include hydroxyethyl (meth)acrylate, hydroxypropyl (meth)acrylate, hydroxybutyl (meth)acrylate, allyl alcohol, methallyl alcohol, and adducts of these with ε-caprolactone. These are used singly or two or more of them are used in combination.

The acrylic resin (iii) may have, for example, an OHV of 5 mg KOH/g or more and 100 mg KOH/g or less, an Mn of 500 or more and 10,000 or less, and an epoxy equivalent of 200 g/eq or more and 700 g/eq or less.

### <<Organic solvent>>

Examples of the organic solvent include ester-based solvents such as ethyl acetate, butyl acetate, isopropyl acetate, ethylene glycol monoethyl ether acetate, propylene glycol monomethyl ether acetate, and propylene glycol monoethyl ether acetate; ether-based solvents such as propylene glycol monomethyl ether, ethylene glycol monomethyl ether, methylmethoxybutanol, ethoxypropanol, ethylene glycol isopropyl ether, ethylene glycol-t-butyl ether, ethylene glycol monoethyl ether, ethylene glycol monobutyl ether, methoxybutanol, and propylene glycol monobutyl ether; alcohol-based solvents such as methanol, ethanol, butanol, and propyl alcohol; ketonebased solvents such as acetone, methyl ethyl ketone, and methyl isobutyl ketone; aliphatic hydrocarbon-based solvents such as Swasol, ShellSol, and Mineral Spirit; and aromatic solvents such as xylene, toluene, Solvesso-100 (S-100), and Solvesso-150 (S-150). These are used singly or two or more of them are used in combination.

The organic solvent is added, for example, such that the solid content concentration of the first clear coating composition (C1) is 20% by mass or more and 60% by mass or less.

### <<Pigment and dye>>

The first clear coating composition (C1) contains at least one selected from the group consisting of a coloring pigment, a glitter pigment, and a dye. Thanks to this, a colored clear coating film is obtained. "Being colored" means having a color, and may be achromatic or chromatic.

Examples of the coloring pigment include organic coloring pigments such as azo chelate pigments, insoluble azo pigments, condensed azo pigments, diketopyrrolopyrrole-based pigments, benzimidazolone-based pigments, phthalocyanine-based pigments, indigo pigments, perinone-based pigments, perylenebased pigments, dioxane-based pigments, quinacridone-based pigments, dioxazinebased pigments, anthraquinone-based pigments, isoindolinone-based pigments, and metal complex pigments; and inorganic coloring pigments such as chrome yellow, yellow iron oxide, red iron oxide, carbon black, and titanium dioxide. These are used singly or two or more of them are used in combination.

Examples of the glitter pigment include aluminum powder, alumina powder, bronze powder, copper powder, tin powder, zinc powder, iron phosphide, metal-coated mica powder, titanium dioxide-coated mica powder, and titanium dioxide-coated glass powder. These are used singly or two or more of them are used in combination. The glitter pigment may be colored.

Examples of the dye include 1:2 chromium complex black, 1:2 chromium complex yellow, and 1:2 cobalt complex yellow. These are used singly or two or more of them are used in combination.

Among them, the first clear coating composition (C1) may contain a black pigment (typically, carbon black).

Examples of the carbon black include furnace black and acetylene black, which are commonly used. Specific examples include carbon black manufactured by Degussa, such as ColorBlack Fw200, ColorBlack Fw200P, and ColorBlack Fw285, Raven 5750, Raven 5250, Raven 5000, and Raven 3500 manufactured by Columbian Chemicals Co., and Emperor 2000, Monarch 1000, Monarch 1100, Monarch 1300, and Monarch 1400 manufactured by Cabot Corporation. These are used singly or two or more of them are used in combination.

The first clear coating composition (C1) may further contain an extender pigment or a matte pigment. Examples of the extender pigment include calcium carbonate, barium sulfate, clay, and talc. Examples of the matte pigment include silica. These are used singly or two or more of them are used in combination.

The total PWC_{T} of all pigments and dyes may be 0.01% by mass or more and 60% by mass or less. From the viewpoint of hiding property, the PWC_{T} may be 1.7% by mass or more, and may be 14.0% by mass or more. The PWC_{T} may be 60% by mass or less, may be 40% by mass or less, and may be 20% by mass or less.

The total PWCc of the coloring pigment, the glitter pigment, and the dye may be 0.01% by mass or more and 50% by mass or less. From the viewpoint of hiding property, the PWC_{C} may be 1.7% by mass or more, and may be 4.0% by mass or more. The PWC_{C} may be 50% by mass or less, may be 30% by mass or less, and may be 20% by mass or less.

PWC is the total mass ratio of the pigment and dye of interest to the solid content mass of the coating composition.

From the viewpoint of inhibiting clogging of a nozzle, the average particle size of the pigment may be less than 1/4 of the diameter of the nozzle. The average particle size of the pigment may be, for example, 50 µm or less, and may be 25 µm or less. Prior to dispensing application, the first clear coating composition (C1) may be filtered through a filter to remove particles having an average particle size being 1/4 or more of the diameter of the nozzle.

The average particle size of the pigment is a 50% average particle size (D50) in a particle size distribution on volume basis determined using a laser diffraction/scattering particle size distribution analyzer. The average particle size of the pigment may be measured from an electron microscope image of a coating film using image processing software. For example, 10 pigment particles are arbitrarily selected in the above image, and the diameters of circles (equivalent circles) equal in area as those pigment particles are regarded as the diameters of the pigment particles. The diameters of 10 pigment particles are calculated, and the average value thereof can be taken as the average particle size of the pigment.

When the particle size of the pigment is large, the hiding property of the coating film is generally improved. As noted above, the use of large pigments in dispensing application should be avoided, but in the present disclosure, the PWC of a pigment and a dye can be increased as long as the low-shear viscosity is in a prescribed range. Thanks to this, the hiding property of a colored clear coating film can be improved. For example, the monochrome hiding film thickness of the colored clear coating film may be 30 µm or less, and may be 15 µm or less.

The thinner the monochrome hiding film thickness, the better in hiding property the coating film. In other words, when the hiding property is high, the film thickness can be reduced. Therefore, when the first clear coating composition (C1) capable of affording a coating film having high hiding property is used, application can be performed under conditions where sagging is less prone to occur.

The monochrome hiding film thickness is measured using a hiding-chart in accordance with JIS K 5600-4-1 (b). A colored clear coating film is formed by dispensing application on a 2 × 2 cm square monochrome checkered pattern of the hiding-chart such that a gradient of dry-film thickness is formed, and then the colored clear coating film is heat-cured. Next, a coating film portion where the monochrome checkered pattern cannot be seen through is visually determined, and the film thickness of the portion is measured. The measured film thickness is the monochrome hiding film thickness.

### <<Viscosity agent>>

The first clear coating composition (C1) may include a viscosity agent. The low-shear viscosity of the first clear coating composition (C1) can be easily adjusted to the above range by the viscosity agent.

Examples of the viscosity agent include a silica-based fine powder, a mineral-based viscosity agent, a polyamide-based viscosity agent, a cellulose-based viscosity agent, a polyolefin-based viscosity agent, a polyurea-based viscosity agent, a barium sulfate atomized powder, and an organic resin microparticle viscosity agent. These are used singly or two or more of them are used in combination.

Among them, the viscosity agent may be at least one selected from the group consisting of a polyamide-based viscosity agent, a cellulose-based viscosity agent, a polyolefin-based viscosity agent, a polyurea-based viscosity agent, and an organic resin microparticle viscosity agent. By these viscosity agents, white blur in a resulting colored clear coating film is easily inhibited. White blur can be caused by a difference in optical characteristics between the pigment and the viscosity agent, and deteriorates designability.

The silica-based fine powder is a powder containing SiO₂. Examples of the silica-based fine powder include clay, diatomite, white carbon, and colloidal silica. Among them, colloidal silica may be used.

Examples of the mineral-based viscosity agent include swellable laminar silicates whose crystal structure has a 2:1 type structure. Examples of such swellable laminar silicates specifically include smectite group clay minerals, such as natural or synthetic montmorillonite, saponite, hectorite, stevensite, beidellite, nontronite, bentonite, and laponite; swelling mica group clay minerals, such as Na-type tetrasilicic fluorine mica, Li-type tetrasilicic fluorine mica, Na salt-type fluorine taeniolite, and Li-type fluorine taeniolite; vermiculite; and substitution products or derivatives thereof. Among them, bentonite may be used.

Examples of the polyamide-based viscosity agent include fatty acid amides, polyamides, acrylic amides, long-chain polyaminoamides, aminoamides, and salts thereof (e.g., phosphates).

Examples of the cellulose-based viscosity agent include cellulose acetate butyrate (CAB), carboxymethyl cellulose, methyl cellulose, hydroxyethyl cellulose, hydroxyethyl methyl cellulose, hydroxypropyl methyl cellulose, methyl cellulose, and cellulose nanofiber gel. These are used singly or two or more of them are used in combination. Among them, CAB may be used.

Examples of the polyolefin-based viscosity agent include polyethylene, polypropylene, an ethylene-propylene copolymer, oxidized polyethylene, oxidized polypropylene, an oxidized ethylene-propylene copolymer, an ethylene-(meth)acrylic acid copolymer, an ethylene-maleic anhydride copolymer, and a propylene-maleic anhydride copolymer.

The polyurea-based viscosity agent is a reaction product of an isocyanate and an amine, and has a plurality of urea linkages in one molecule.

The organic resin microparticle viscosity agent is an organic resin particle having a three-dimensional crosslinked structure therein. The organic resin microparticle viscosity agent is swelled by an organic solvent, and the swelling amount is controlled by the three-dimensional crosslinked structure.

The solid content of the viscosity agent is, for example, 0.1% by mass or more and 40% by mass or less based on the solid content mass of the first clear coating composition (C1). When the content of the viscosity agent is in this range, the low-shear viscosity is easily adjusted to a desired range.

### <<Surface conditioning agent>>

The first clear coating composition (C1) may include a surface conditioning agent. The surface conditioning agent is added to control the surface tension of the first clear coating composition (C1). The wettability of the first clear coating composition (C1) to the underlying layer is improved by the surface conditioning agent. The surface conditioning agent can also improve the recoating property of the multilayer coating film.

Examples of the surface conditioning agent include silicone-based, acrylic, vinyl-based, and fluorine-based surface conditioning agents. These are used singly or two or more of them are used in combination. Among them, at least one of the silicone-based surface conditioning agent and the acrylic surface conditioning agent is preferable. Examples of the silicone-based surface conditioning agent include polydimethylsiloxane and modified silicone prepared by modifying polydimethylsiloxane. Examples of the modified silicone include a polyether-modified product, an acryl-modified product, and a polyester-modified product. Examples of the acrylic surface conditioning agent include an acrylic copolymer.

The solid content of the surface conditioning agent is, for example, 0.01% by mass or more and 10% by mass or less based on the solid content mass of the first clear coating composition (C1). The content of the surface conditioning agent may be 0.02% by mass or more, and may be 0.04% by mass or more. The content of the surface conditioning agent may be 8% by mass or less, and may be 6% by mass or less.

### <<Others>>

The first clear coating composition (C1) may include various additives, as necessary. Examples of the additives include an ultraviolet absorber, an antioxidant, an antifoaming agent, a dispersant, a pinhole inhibitor, a pigment derivative, a silane coupling agent, and an interface control agent.

For example, the dispersant is added to enhance the dispersibility of the pigment. The dispersant is not particularly limited and is appropriately selected according to the types of the solvent and the pigment, and the like. Examples of the dispersant include a compound having an acid or a base such as an acrylic compound, a polyester-based compound, and a polyurethane-based compound. These are used singly or two or more of them are used in combination. Among them, the dispersant may be a copolymer-based compound. The solid content of the dispersant may be, for example, 0.01% by mass or more and 8% by mass or less based on the solid content mass of the first clear coating composition (C1). The content of the dispersant may be 0.1% by mass or more. The content of the dispersant may be 4.5% by mass or less.

### (Intermediate coating composition (A))

The intermediate coating composition (A) is a solvent-based composition. As the intermediate coating composition (A), a conventionally known intermediate coating composition can be used. The intermediate coating composition (A) contains, for example, a coating film forming resin, a curing agent, a pigment or a dye, and an organic solvent as a solvent.

### <<Coating film forming resin>>

Examples of the coating film forming resin include an acrylic resin, a polyester resin, a polyurethane resin, an alkyd resin, a fluororesin, an epoxy resin, a polyether resin, and a polycarbonate resin. These are used singly or two or more of them are used in combination. The coating film forming resin has a crosslinkable functional group. Examples of the crosslinkable functional group include a carboxy group, a hydroxy group, an epoxy group, a silanol group, and a (meth)acryloyl group.

### <<Curing agent>>

Examples of the curing agent include a melamine resin, a blocked isocyanate compound, an epoxy compound, an aziridine compound, a carbodiimide compound, an oxazoline compound, and a metal ion. These are used singly or two or more of them are used in combination.

### <<Pigment and dye>>

Examples of the pigment and the dye include those recited as examples in the section of the first clear coating composition (C1).

### <<Organic solvent>>

Examples of the organic solvent include those recited as examples in the section of the first clear coating composition (C1).

### <<Others>>

The intermediate coating composition (A) may include various additives, as necessary. Examples of the additives include those recited as examples in the section of the first clear coating composition (C1).

Next, the respective steps will be described.

### • Application of intermediate coating composition (A)

An intermediate coating composition is applied to an article to be coated 11. The applying method may be a method other than dispensing application. Examples of the applying method include air spray coating, airless spray coating, and rotary atomization coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "micro micro bell (µµ bell)", "micro bell (µ bell)", "metallic bell (meta bell)", or the like is used.

The intermediate coating composition (A) is applied, for example, such that the thickness (dry-film thickness) of the intermediate coating film 12 after curing is 5 µm or more and 40 µm or less.

### (Article to be coated)

Examples of the material of the article to be coated 11 include metal, resin, and glass. Examples of the article to be coated 11 specifically include automobile bodies such as passenger cars, trucks, motorcycles, and buses, parts for automobile bodies, and automobile parts such as spoilers, bumpers, mirror covers, grilles, and door knobs.

Examples of the metal include iron, copper, aluminum, tin, zinc, and alloys thereof (e.g., steel). Examples of a metallic article to be coated 11 typically include steel sheets such as cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based plated steel sheets, and tin-based plated steel sheets.

The metallic article to be coated 11 may have been subjected to surface treatment. Examples of the surface treatment include phosphate salt treatment, chromate treatment, zirconium chemical conversion treatment, and composite oxide treatment. The metallic article to be coated 11 may have been further coated with an electrodeposition coating material after the surface treatment. The electrodeposition coating material may be of a cationic type or of an anionic type.

Examples of the resin include polypropylene resin, polycarbonate resin, urethane resin, polyester resin, polystyrene resin, ABS resin, vinyl chloride resin, and polyamide resin. The article to be coated 11 made of resin may have been subjected to degreasing treatment.

### • Preliminary drying of intermediate coating composition (A)

After the intermediate coating composition (A) is applied, preliminary drying is performed before the colored first clear coating composition is applied. In the preliminary drying, at least a part of the solvent is removed. Examples of the preliminary drying method include natural drying (hereinafter also referred to as "WET treatment") and heat drying (hereinafter also referred to as "PH treatment"). In the natural drying, the article to be coated 11 to which the intermediate coating composition has been applied is left standing for 5 minutes or more and 15 minutes or less under a temperature condition of 20°C or more and 25°C or less, for example. The heat drying is performed under the condition under which curing reactions by coating film forming components do not proceed or at least the curing reaction is not completed. In the heat drying, the article to be coated 11 to which the intermediate coating composition has been applied is heated for 30 seconds or more and 30 minutes or less under a temperature condition of, for example, 50°C or more and 100°C or less.

### • Application of first clear coating composition (C1)

The first clear coating composition (C1) is further applied. The first clear coating composition (C1) is applied using a dispenser. Thanks to this, the coating efficiency is improved, and a desired portion can be coated without being masked. With the first clear coating composition (C1) to be used in the present disclosure, occurrence of sagging is inhibited even when dispensing application is performed.

The first clear coating composition (C1) is applied, for example, such that the thickness of the colored clear coating film after curing is 5 µm or more and 70 µm or less. The thickness of the colored clear coating film after curing may be 10 µm or more, and may be 15 µm or more. According to the present disclosure, sagging is inhibited even when a large amount of clear coating composition is applied at a time.

In dispensing application, the first clear coating composition (C1) is discharged in a liquid form at a fixed amount from a nozzle hole toward the article to be coated 11. The first clear coating composition (C1) may be discharged either in the form of droplets or in the form of liquid pillars. Both the method of discharging in the form of droplets and the method of discharging in the form of liquid columns are called dust-free coating (Oversray-free Coating). In the dispensing application, for example, a coating composition is discharged from a plurality of microholes formed at a prescribed pitch in a nozzle head, and applied to an article to be coated in a droplet or liquid column state. As a result, a coating film having a prescribed width is formed on the article to be coated 11. The method of discharging in the form of droplets is inkjet coating or is similar thereto. A method of discharging in the form of liquid columns is described in, for example, JP-A-2015-196140.

The article to be coated 11 is placed, for example, on a table (not shown). The article to be coated 11 may be moved together with the table, or the dispenser may be moved, or both the table and the dispenser may be moved.

The discharge mechanism of the dispenser is not particularly limited, and examples thereof include a pneumatic type, a piezo type, a plunger type, a non-contact type, and a thermal valve type. The open/close state of the discharge nozzle at the time of application may be either periodically switched or continued in a continuous state. Depending on the open/closed state of the discharge nozzle, the coating composition is discharged in the form of droplets or liquid columns. The number of nozzles is not particularly limited, and may be one or more, and may be two or more.

The diameter of the nozzle of the dispenser is, for example, 50 µm or more and 400 µm or less. When the diameter of the nozzle is 400 µm or less, excessive discharge is inhibited, so that the film thickness is easily controlled. When the diameter of the nozzle is 50 µm or more, nozzle clogging is easily inhibited.

### • Heat-curing

Subsequently, the intermediate coating composition (A) and the first clear coating composition (C1) are cured by heating. As a result, a multilayer coating film including an intermediate coating film 12 and a colored clear coating film 13 is obtained. According to the present embodiment, the environmental load and the production cost are reduced because a plurality of coating compositions can be cured by a single heating operation.

The heating temperature is, for example, 110°C or more and 180°C or less. The heating temperature may be 120°C or more. The heating temperature may be 160°C or less. The heating time is appropriately set according to the heating temperature. When the heating temperature is 120°C or more and 160°C or less, the heating time may be 10 minutes or more and 60 minutes or less.

### [Second Embodiment]

The present embodiment is different from the first embodiment in that after the application of the first clear coating composition (C1), a second clear coating composition (C2) is applied, and then heat-curing is performed. This difference will be described as follows. In the present embodiment, other steps are the same as those in the first embodiment, and thus the description thereof will be omitted.

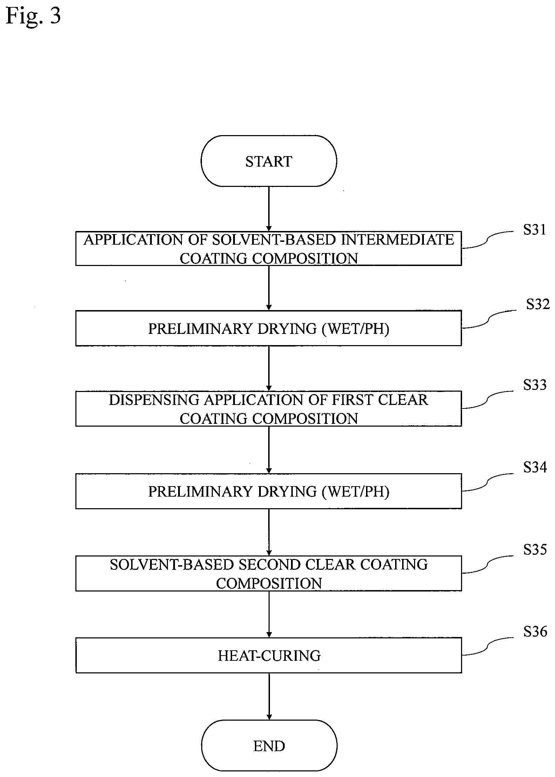

Fig. 3 is a flowchart showing one example of the method for forming a multilayer coating film according to the second embodiment. First, a thermally curable and solvent-based intermediate coating composition (A) is applied onto an article to be coated (S31), and then preliminary drying is performed (S32). Subsequently, a thermally curable and colored first clear coating composition (C1) is applied with a dispenser (S33). Subsequently, after preliminary drying is performed (S34), a thermally curable and solvent-based second clear coating composition (C2) is applied (S35). Finally, heat-curing is performed, and the intermediate coating composition (A), the first clear coating composition (C1), and the second clear coating composition (C2) are thereby cured at a time (S36).

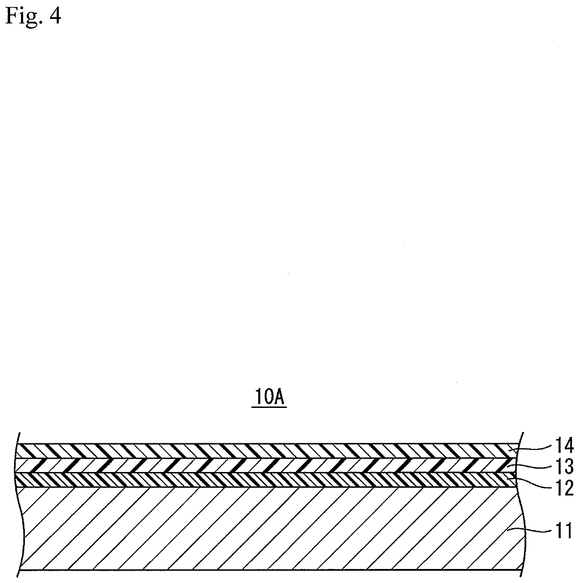

By the method of the second embodiment, a multilayer coating film including an intermediate coating film disposed on an article to be coated, a colored clear coating film disposed on the intermediate coating film, and a second clear coating film disposed on the colored clear coating film is formed. Fig. 4 is a schematic cross-sectional view illustrating the multilayer coating film 10A in the second embodiment. The multilayer coating film 10A includes an intermediate coating film 12 disposed on an article to be coated 11, a colored clear coating film 13 disposed on the intermediate coating film 12, and a second clear coating film 14 disposed on the colored clear coating film 13.

### • Preliminary drying of first clear coating composition (C1)

The preliminary drying of the first clear coating composition (C1) may be performed under the same conditions as the conditions for the preliminary drying of the intermediate coating composition (A), or may be performed under different conditions.

### • Application of second clear coating composition (C2)

Examples of the applying method include the same methods as the methods of applying the intermediate coating composition (A). Among them, rotary atomization type electrostatic coating may be employed.

The second clear coating composition (C2) is applied, for example, such that the thickness of the second clear coating film 14 after curing is 1 µm or more and 50 µm or less. The second clear coating film 14 may be a single layer or a laminated coating film having two or more layers.

### (Second clear coating composition (C2))

The second clear coating composition (C2) is a solvent-based composition. As the second clear coating composition (C2), a conventionally known clear coating composition can be used. The second clear coating composition (C2) may contain, for example, a coating film forming resin, a curing agent, an organic solvent, and, as necessary, an additive, which are the same as those of the intermediate coating composition (A). The second clear coating composition (C2) may or may not contain a coloring pigment, a glitter pigment, and a dye.

### [Third Embodiment]

The present embodiment is different from the first embodiment in that heat-curing is performed after the application of the intermediate coating composition (A), and that a water-borne base coating composition (B) is applied after the application of the intermediate coating composition (A) and before the application of the first clear coating composition (C1), and then heat-curing is performed. This difference will be described as follows. In the present embodiment, other steps are the same as those in the first embodiment, and thus the description thereof will be omitted.

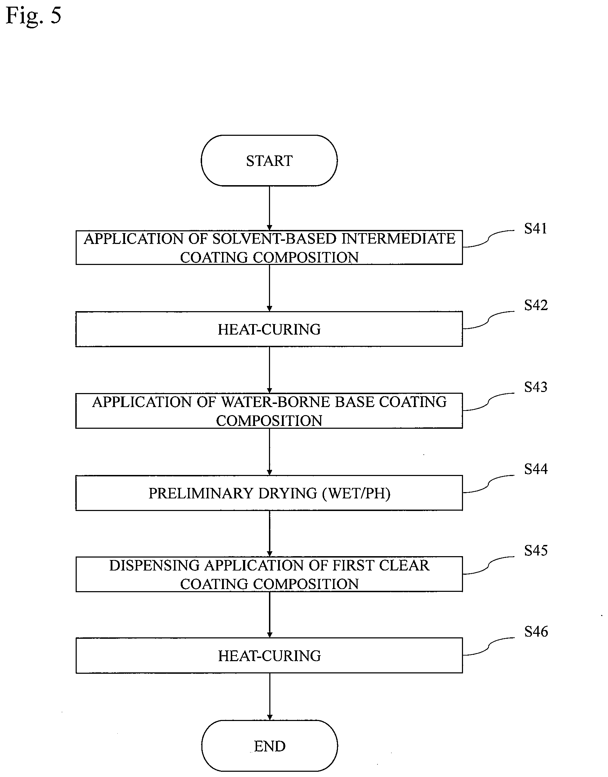

Fig. 5 is a flowchart showing one example of the method for forming a multilayer coating film according to the third embodiment. First, a thermally curable and solvent-based intermediate coating composition (A) is applied onto an article to be coated (S41), and subsequently, heat-curing is performed (S42). Thereafter, a water-borne base coating composition (B) is applied (S43), and then preliminary drying is performed (S44). Subsequently, a thermally curable and colored first clear coating composition (C1) is applied with a dispenser (S45). Finally, heat-curing is performed again (S46), and the water-borne base coating composition (B) and the first clear coating composition (C1) are thereby cured at a time.

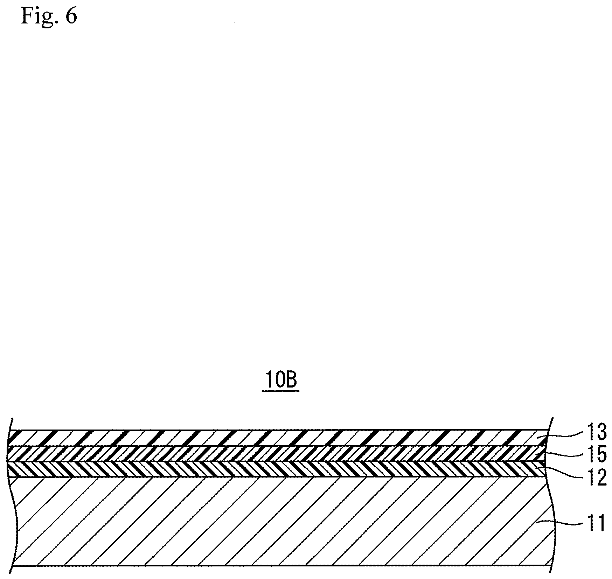

By the method of the third embodiment, a multilayer coating film including an intermediate coating film disposed on an article to be coated, a base coating film disposed on the intermediate coating film, and a colored clear coating film disposed on the base coating film is formed. Fig. 6 is a schematic cross-sectional view illustrating the multilayer coating film 10B in the third embodiment. The multilayer coating film 10B includes an intermediate coating film 12 disposed on an article to be coated 11, a base coating film 15 disposed on the intermediate coating film 12, and a colored clear coating film 13 disposed on the base coating film 15.

### • Heat-curing of intermediate coating composition (A)

The heat-curing of the intermediate coating composition (A) may be performed under the same conditions as the conditions for the heat-curing of the first clear coating composition (C1), or may be performed under different conditions.

### • Application of water-borne base coating composition (B)

Examples of the applying method include the same methods as the methods of applying the intermediate coating composition (A). Among them, rotary atomization type electrostatic coating may be employed.

The water-borne base coating composition (B) is applied, for example, such that the thickness of the base coating film after curing is 2 µm or more and 30 µm or less. The base coating film may be a single layer or a laminated coating film having two or more layers.

### (Water-borne base coating composition (B))

As the water-borne base coating composition (B), a conventionally known base coating composition can be used. The water-borne base coating composition (B) may contain, for example, a coating film forming resin, a curing agent, a pigment or a dye, a solvent containing water, and, as necessary, an additive, which are the same as those of the intermediate coating composition (A). In a water-borne coating material, a coating film forming resin may be contained in the form of an emulsion, and may be contained in the form of a dispersion, and may be contained in a state of being dissolved in a solvent.

### [Fourth Embodiment]

The present embodiment is different from the third embodiment in that the second clear coating composition (C2) is applied after the application of the water-borne base coating composition (B) and before the application of the first clear coating composition (C1). This difference will be described as follows. In the present embodiment, other steps are the same as those in the third embodiment, and thus the description thereof will be omitted.

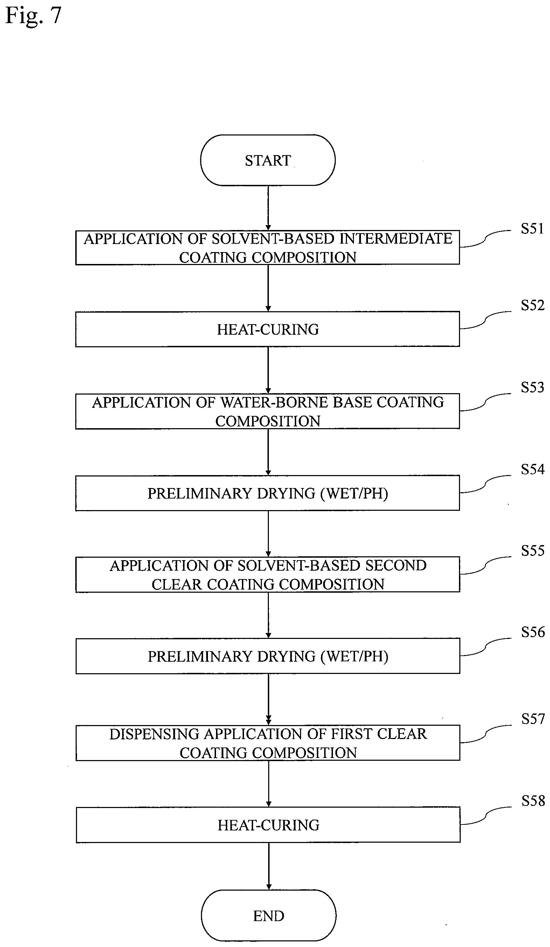

Fig. 7 is a flowchart showing one example of the method for forming a multilayer coating film according to the fourth embodiment. First, a thermally curable and solvent-based intermediate coating composition (A) is applied onto an article to be coated (S51), and then heat-curing is performed (S52). Thereafter, a water-borne base coating composition (B) is applied (S53), and then preliminary drying is performed (S54). Subsequently, a second clear coating composition (C2) is applied (S55), and then preliminary drying is performed again (S56). Next, a thermally curable and colored first clear coating composition (C1) is applied with a dispenser (S57). Finally, heat-curing is performed again (S58), and the water-borne base coating composition (B), the second clear coating composition (C2), and the first clear coating composition (C1) are thereby cured at a time.

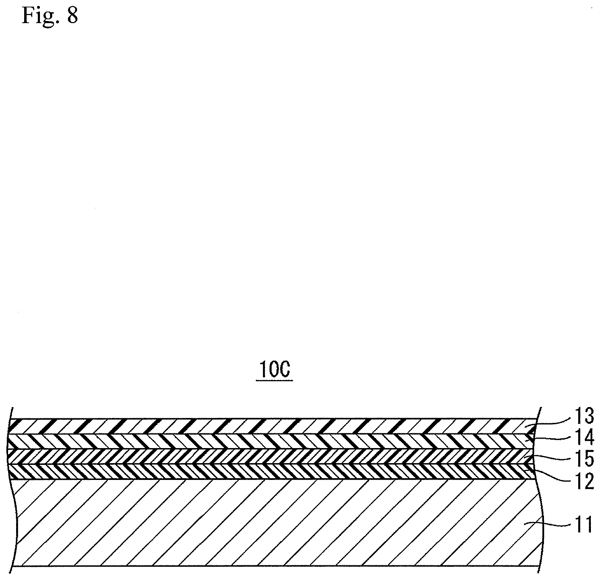

By the method of the fourth embodiment, a multilayer coating film including an intermediate coating film disposed on an article to be coated, a base coating film disposed on the intermediate coating film, a second clear coating film disposed on the base coating film, and a colored clear coating film disposed on the second clear coating film is formed. Fig. 8 is a schematic cross-sectional view illustrating the multilayer coating film 10C in the fourth embodiment. The multilayer coating film 10C includes an intermediate coating film 12 disposed on an article to be coated 11, a base coating film 15 disposed on the intermediate coating film 12, a second clear coating film 14 disposed on the base coating film 15, and a colored clear coating film 13 disposed on the colored clear coating film 13.

### • Preliminary drying of second clear coating composition (C2)

The preliminary drying of the second clear coating composition (C2) may be performed under the same conditions as the conditions for the preliminary drying of the intermediate coating composition (A), or may be performed under different conditions.

### [Fifth Embodiment]

The present embodiment is different from the fourth embodiment in that the order of the application of the first clear coating composition (C1) and the application of the second clear coating composition (C2) is reversed. This difference will be described as follows. In the present embodiment, other steps are the same as those in the fourth embodiment, and thus the description thereof will be omitted.

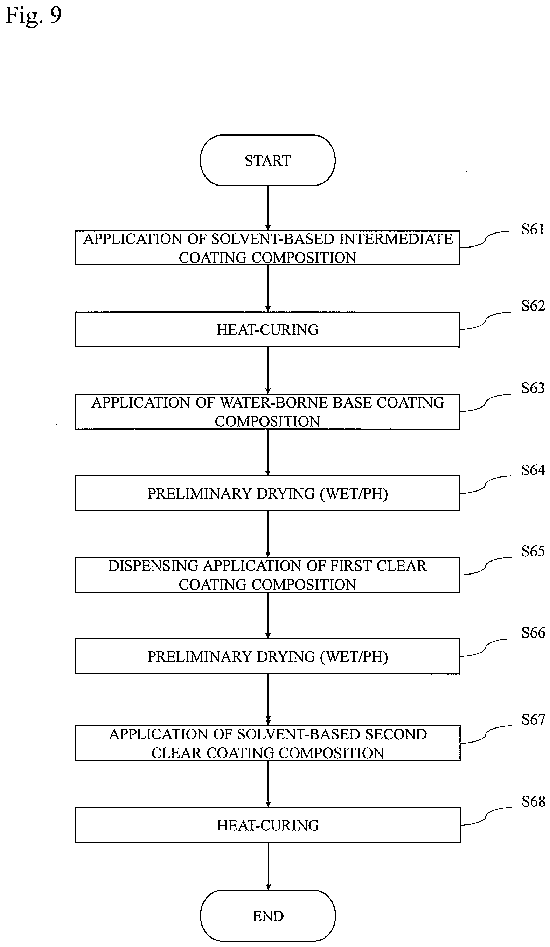

Fig. 9 is a flowchart showing one example of the method for forming a multilayer coating film according to the fifth embodiment. First, a thermally curable and solvent-based intermediate coating composition (A) is applied onto an article to be coated (S61), and then heat-curing is performed (S62). Thereafter, a water-borne base coating composition (B) is applied (S63), and then preliminary drying is performed (S64). Subsequently, a thermally curable and colored first clear coating composition (C1) is applied with a dispenser (S55), and preliminary drying is performed again (S66). Next, a second clear coating composition (C2) is applied (S67). Finally, heat-curing is performed again (S68), and the water-borne base coating composition (B), the first clear coating composition (C1), and the second clear coating composition (C2) are thereby cured at a time.

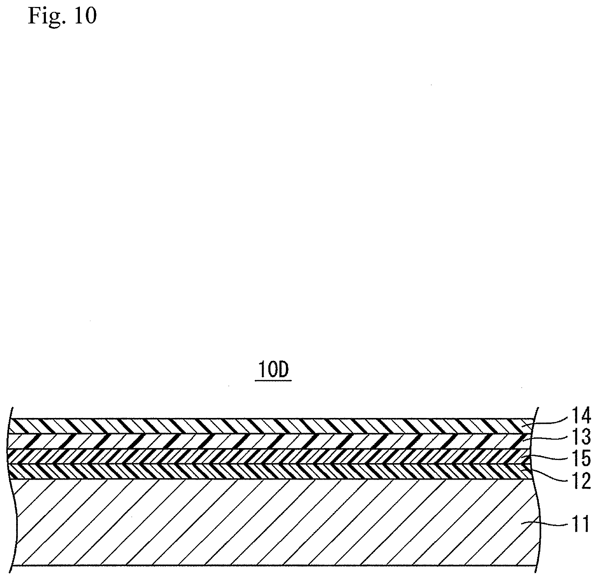

By the method of the fifth embodiment, a multilayer coating film including an intermediate coating film disposed on an article to be coated, a base coating film disposed on the intermediate coating film, a colored clear coating film disposed on the base coating film, and a second clear coating film disposed on the colored clear coating film is formed. Fig. 10 is a schematic cross-sectional view illustrating the multilayer coating film 10D in the fifth embodiment. The multilayer coating film 10D includes an intermediate coating film 12 disposed on an article to be coated 11, a base coating film 15 disposed on the intermediate coating film 12, a colored clear coating film 13 disposed on the base coating film 15, and a second clear coating film 14 disposed on the colored clear coating film 13.

### [Sixth Embodiment]

The present embodiment is different from the third embodiment in that the intermediate coating composition (A) is aqueous, and that after the application of the intermediate coating composition (A), preliminary drying is performed instead of heat-curing. This difference will be described as follows. In the present embodiment, other steps are the same as those in the third embodiment, and thus the description thereof will be omitted.

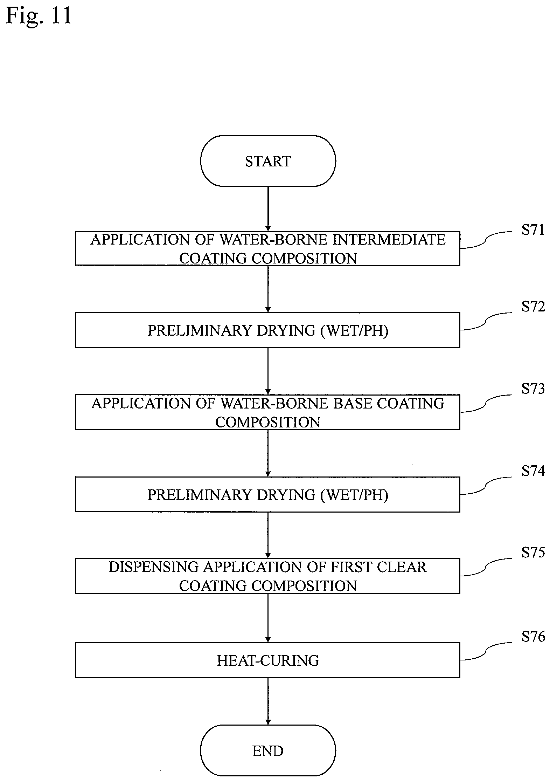

Fig. 11 is a flowchart showing one example of the method for forming a multilayer coating film according to the sixth embodiment. First, a thermally curable and water-borne intermediate coating composition (A) is applied onto an article to be coated (S71), and then preliminary drying is performed (S72). Thereafter, a water-borne base coating composition (B) is applied (S73), and then preliminary drying is performed again (S74). Subsequently, a thermally curable and colored first clear coating composition (C1) is applied with a dispenser (S75). Finally, heat-curing is performed (S76), and the intermediate coating composition (A), the water-borne base coating composition (B), and the first clear coating composition (C1) are thereby cured at a time.

By the method of the sixth embodiment, a multilayer coating film including an intermediate coating film disposed on an article to be coated, a base coating film disposed on the intermediate coating film, and a colored clear coating film disposed on the base coating film is formed. The multilayer coating film in the sixth embodiment has the same configuration as that of the third embodiment (Fig. 6).

The water-borne intermediate coating composition (A) contains water and, as necessary, an organic solvent as solvents. The water-borne intermediate coating composition (A) may contain, for example, an aqueous polyester resin, an aqueous polyurethane resin, and a hydroxy group-containing resin (for example, an aqueous acrylic resin) other than the aqueous polyester resin and the aqueous polyurethane resin as the coating film forming resin.

### [Seventh Embodiment]

The present embodiment is different from the fourth embodiment in that the intermediate coating composition (A) is aqueous, and that after the application of the intermediate coating composition (A), preliminary drying is performed instead of heat-curing. This difference will be described as follows. In the present embodiment, other steps are the same as those in the fourth embodiment, and thus the description thereof will be omitted.

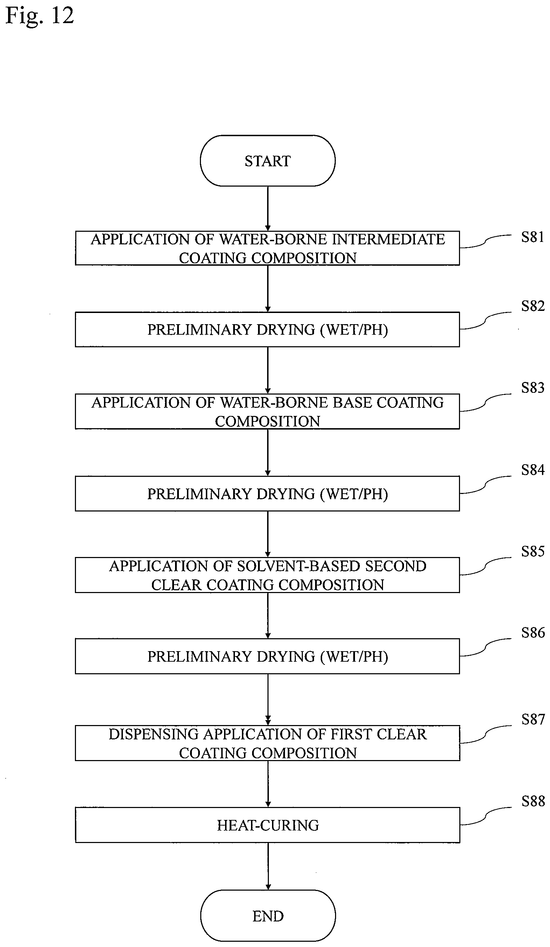

Fig. 12 is a flowchart showing one example of the method for forming a multilayer coating film according to the seventh embodiment. First, a thermally curable and water-borne intermediate coating composition (A) is applied onto an article to be coated (S81), and then preliminary drying is performed (S82). Thereafter, a water-borne base coating composition (B) is applied (S83), and then preliminary drying is performed again (S84). Subsequently, a second clear coating composition (C2) is applied (S85), and then preliminary drying is performed third time (S86). Thereafter, a thermally curable and colored first clear coating composition (C1) is applied with a dispenser (S87). Finally, heat-curing is performed (S88), and the intermediate coating composition (A), the water-borne base coating composition (B), the second clear coating composition (C2), and the first clear coating composition (C1) are thereby cured at a time.

By the method of the seventh embodiment, a multilayer coating film including an intermediate coating film disposed on an article to be coated, a base coating film disposed on the intermediate coating film, a second clear coating film disposed on the base coating film, and a colored clear coating film disposed on the second clear coating film is formed. The multilayer coating film in the seventh embodiment has the same configuration as that of the fourth embodiment (Fig. 8).

### [Eighth Embodiment]

The present embodiment is different from the seventh embodiment in that the order of the application of the first clear coating composition (C1) and the application of the second clear coating composition (C2) is reversed. This difference will be described as follows. In the present embodiment, other steps are the same as those in the seventh embodiment, and thus the description thereof will be omitted.

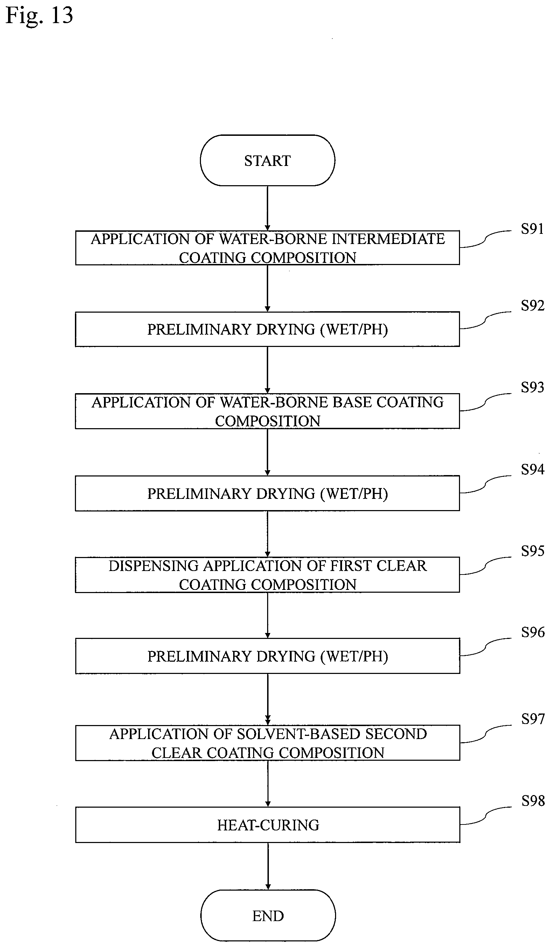

Fig. 13 is a flowchart showing one example of the method for forming a multilayer coating film according to the eighth embodiment. First, a thermally curable and water-borne intermediate coating composition (A) is applied onto an article to be coated (S91), and then preliminary drying is performed (S92). Thereafter, a water-borne base coating composition (B) is applied (S93), and then preliminary drying is performed again (S94). Subsequently, a second clear coating composition (C2) is applied (S95), and then preliminary drying is performed third time (S96). Next, a thermally curable and colored first clear coating composition (C1) is applied with a dispenser (S97). Finally, heat-curing is performed (S98), and the water-borne intermediate coating composition (A), the water-borne base coating composition (B), the first clear coating composition (C1), and the second clear coating composition (C2) are thereby cured at a time.

By the method of the eighth embodiment, a multilayer coating film including an intermediate coating film disposed on an article to be coated, a base coating film disposed on the intermediate coating film, a colored clear coating film disposed on the base coating film, and a second clear coating film disposed on the colored clear coating film is formed. The multilayer coating film in the eighth embodiment has the same configuration as that of the fifth embodiment (Fig. 10).

It is noted that the present disclosure is not limited to the above-described embodiments, and can be modified in design without departing from the gist of the present disclosure. For example, any two or more features of the above-described embodiments may be combined.

In the embodiments described above, the intermediate coating composition, the water-borne base coating composition, and the second clear coating composition are applied by methods other than the dispensing application method, but the present invention is not limited thereto. The intermediate coating composition, the water-borne base coating composition, and the second clear coating composition may be applied by dispensing application.

In the embodiments described above, a water-borne base coating composition is used, but the present invention is not limited thereto. The base coating composition may be either aqueous or solvent-based.

In the embodiments described above, a solvent-based second clear coating composition is used, but the present invention is not limited thereto. The second clear coating composition may be either aqueous or solvent-based.

In the embodiments described above, preliminary drying may be either WET treatment or PH treatment.

### Examples

The present invention will be described in more detail by way of the following examples, to which the present invention is not intended to be limited. In the examples, "parts" and "%" are on a mass basis unless otherwise indicated.

The solid content concentration was calculated from the residue yielded when the coating composition was heated at 140°C in accordance with the determination of non-volatile matter content specified in JIS K 5601-1-2.

The LSV and the HSV were measured using "MCR 302" (manufactured by Anton Paar GmbH) as a rheometer at a measurement temperature of 23°C, a cone-plate of 25φ or 50φ, and each shear rate.

The Mn was measured using "HLC-8220GPC" (trade name, manufactured by Tosoh Corporation) as a GPC device and three columns "TSK Gel SuperMultipore HZ-M" (manufactured by Tosoh Bioscience, Inc.) under the following conditions: mobile phase: tetrahydrofuran, measurement temperature: 40°C, flow rate: 0.35 mL/min, and detector: RI.

The AV and the OHV were calculated on the basis of the acid values and hydroxyl values of the monomers used.

### [Preparation of pigment dispersion paste]

28.6 parts of a dispersant (Disperbyk 161, manufactured by BYK), 57.1 parts of an organic solvent (Solvesso 150), and 14.3 parts of a black pigment (trade name: RAVEN 5000, carbon black, manufactured by Columbian Chemicals Co.) were preliminarily mixed. Thereafter, using a paint conditioner and glass beads media, the preliminary mixture was mixed at room temperature until the average particle size of the pigment reached 5 µm or less. In this way, a solvent-based black pigment dispersion paste having a solid content concentration of 22.9% by mass was obtained.

### [Preparation of first clear coating composition (C1-1)]

62.7 parts of the half-ester acid anhydride group-containing acrylic resin (i), 20.0 parts of the carboxy group-containing polyester resin (ii), 73.7 parts of the acrylic resin (iii) having a hydroxy group and an epoxy group, 1 part of the ultraviolet absorber, 1 part of the light stabilizer, 0.3 parts of the acrylic surface conditioning agent, 4.9 parts of the viscosity agent a, and 1.0 parts of the surface conditioning agent, which are shown below, were mixed. Subsequently, 30 parts of an organic solvent and 35.7 parts of the pigment dispersion paste were blended to afford a first clear coating composition (C1-1).

### [Preparation of first clear coating compositions (C1-2 to 13, c1-1 to 6)]

First clear coating compositions (C1-2 to 13, c1-1 to 6) were prepared in the same manner as in the preparation of the first clear coating composition (C1-1) except that the blending components and the blending amounts were changed as shown in Table 1.

The descriptions in Tables 1 and 2 are as follows.

### (Acrylic resin (i))

Half-ester acid anhydride group-containing acrylic resin, manufactured by Nippon Paint Automotive Coatings Co., Ltd., solid content concentration: 51.5% by mass, AV: 150 mg KOH/g, Mn: 2800

### (Polyester resin (ii))

Carboxy group-containing polyester resin, manufactured by Nippon Paint Automotive Coatings Co., Ltd., solid content concentration: 75.0% by mass, AV: 120 mg KOH/g, Mn: 2500

### (Acrylic resin (iii))

Acrylic resin having a hydroxy group and an epoxy group, manufactured by Nippon Paint Automotive Coatings Co., Ltd., solid content concentration: 71.5% by mass, epoxy equivalent: 400 g/eq, OHV: 50 mg KOH/g, Mn: 2200)

(Viscosity agent)
a: Trade name: BHEOBYK-410, manufactured by BYK, polyurea-based viscosity agent, solid content concentration: 52% by mass
b: Trade name: SETALUX 91756 VS-60YA, manufactured by Allnex GmbH, polyurea-based viscosity agent
c: Trade name: BHEOBYK-430, manufactured by BYK, urea-modified polyamide-based viscosity agent
d: Trade name: DISPARLON BB-102, manufactured by Kusumoto Chemicals, Ltd., polyamide-based viscosity agent
e: Trade name: DISPARLON 6900-20X, manufactured by Kusumoto Chemicals, Ltd., polyamide-based viscosity agent
f: Trade name: DISPARLON 4200-10, manufactured by Kusumoto Chemicals, Ltd., polyolefin-based (oxidized polyethylene) viscosity agent
g: 10% Solution of trade name: CAB-1000 (cellulose-based viscosity agent, manufactured by EASTMAN CHEMICAL) in ethyl acetate
h: 12% Solution of trade name: Pliolite AC4 (organic resin microparticle viscosity agent, manufactured by Eliokem) in Solvesso 100

### (Ultraviolet absorber)

Trade name: Tinuvin 928, manufactured by BASF SE, solid content concentration: 100%

### (Light Stabilizer)

Trade name: Tinuvin 123, manufactured by BASF SE, solid content concentration: 100%

### (Acrylic surface conditioning agent)

Trade name: RESIFLOW LV, manufactured by Estron Chemical, Inc., solid content concentration: 100%

### (Anti-popping agent)

Trade name: DISPARLON OX-881, manufactured by Kusumoto Chemicals, Ltd., solid content concentration: 30%

### (Organic solvent)

Mixture of ethyl 3-ethoxypropionate and Solvesso 150 mixed at 1 : 1

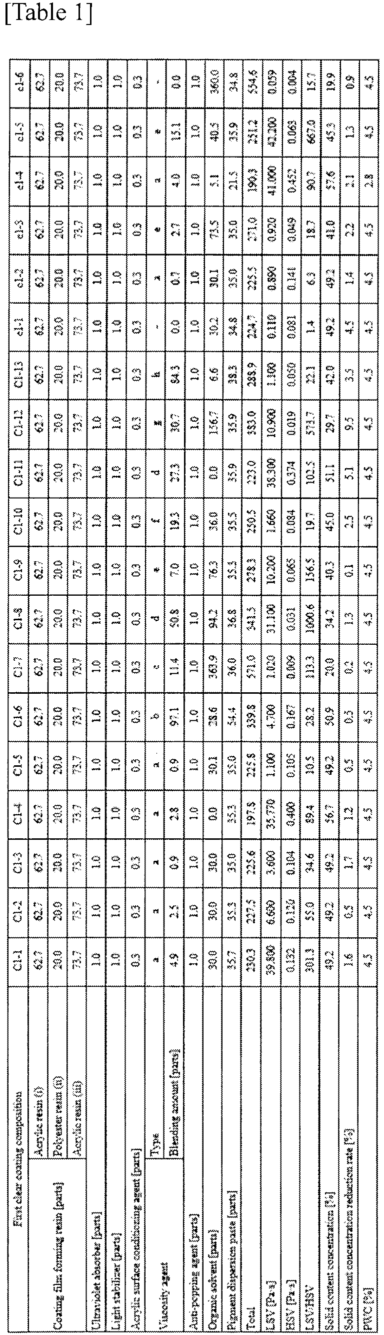

### [Example 1]

A multilayer coating film having the same configuration as in Fig. 6 was formed by the same method as in the third embodiment (the flowchart shown in Fig. 5) described above.

### (1) Preparation of article to be coated

A cationic electrodeposition coating material (trade name: Powernix 110, manufactured by Nippon Paint Co., Ltd.) was electrodeposited on a zinc phosphatetreated dull steel sheet such that the dry coating film had a thickness of 20 µm. Thereafter, heat-curing was performed at 160°C for 30 minutes to form a cured electrodeposition coating film, affording an article to be coated.

### (2) Application and heat-curing of intermediate coating composition

The solvent-based intermediate coating composition (A-2) shown below was applied onto the cured electrodeposition coating film by rotary atomization type electrostatic coating such that the cured film had a thickness of 20 µm, and was heat cured at 140°C for 30 minutes, affording an intermediate coating film.

### (3) Application and preliminary drying of water-borne base coating composition

Subsequently, the water-borne base coating composition (B) was applied by rotary atomization type electrostatic coating such that the cured film had a thickness of 15 µm. Thereafter, the preliminary drying (PH treatment 1) described below was performed.

### (4) Dispensing application of first clear coating composition

Subsequently, the first clear coating composition (C1-1) was applied using a dispenser (MDS 3200 manufactured by Vermes, nozzle diameter: 100 µm) such that the cured film had a thickness of 15 µm.

### (5) Heat-curing

Finally, heat-curing at 140°C for 30 minutes was performed to form a multilayer coating film including an intermediate coating film (thickness: 20 µm), a base coating film (thickness: 15 µm), and a colored clear coating film (thickness: 15 µm).

### [Examples 2 to 13, Comparative Examples 1 to 6]

Multilayer coating films each including an intermediate coating film (thickness: 20 µm), a base coating film (thickness: 15 µm), and a colored clear coating film (thickness: 15 µm) were formed in the same manner as in Example 1 except that the first clear coating compositions (C1-2 to 13, c1-1 to 6) were used instead of the clear coating composition (C-1).

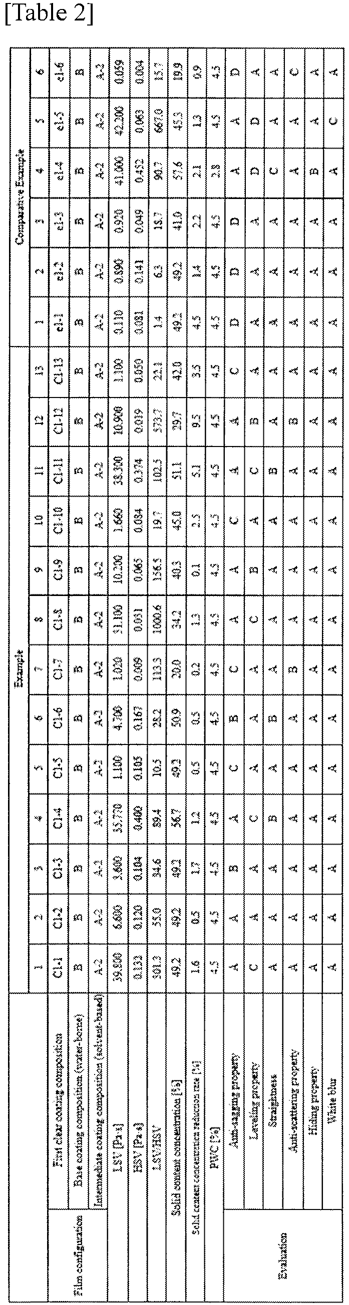

### [Examples 14 to 23]

A multilayer coating film was formed by applying the coating compositions in the same manner as in Example 1 sequentially in the order from the lower side toward the upper side of Table 3. Preliminary drying or baking was performed between the applications of the coating compositions as shown in Table 3. After the last coating composition was applied, heat-curing at 140°C for 30 minutes was performed.

The description in Table 3 is as follows.
A-1: Water-borne intermediate coating composition, trade name: AQUAREX AR620, manufactured by Nippon Paint Automotive Coatings Co., Ltd.
A-2: Solvent-based intermediate coating composition, trade name: ORGA-30-P, manufactured by Nippon Paint Automotive Coatings Co., Ltd.
B: Water-borne base coating composition, trade name AQUAREX AR2000, aqueous, manufactured by Nippon Paint Automotive Coatings Co., Ltd.
C2: Solvent-based second clear coating composition, trade name: MACFLOW O-1820KN, manufactured by Nippon Paint Automotive Coatings Co., Ltd.
WET treatment: preliminary drying, allowing to stand at a temperature of 23°C for 7 minutes
PH treatment 1: preliminary drying, allowing to stand at a temperature of 23°C for 3 minutes, and then heating at 80°C for 3 minutes
PH treatment 2: preliminary drying, allowing to stand at a temperature of 23°C for 7 minutes, and then heating at 90°C for 4 minutes
Cure: baking, allowing to stand at a temperature of 23°C for 7 minutes, and then heating at 140°C for 30 minutes

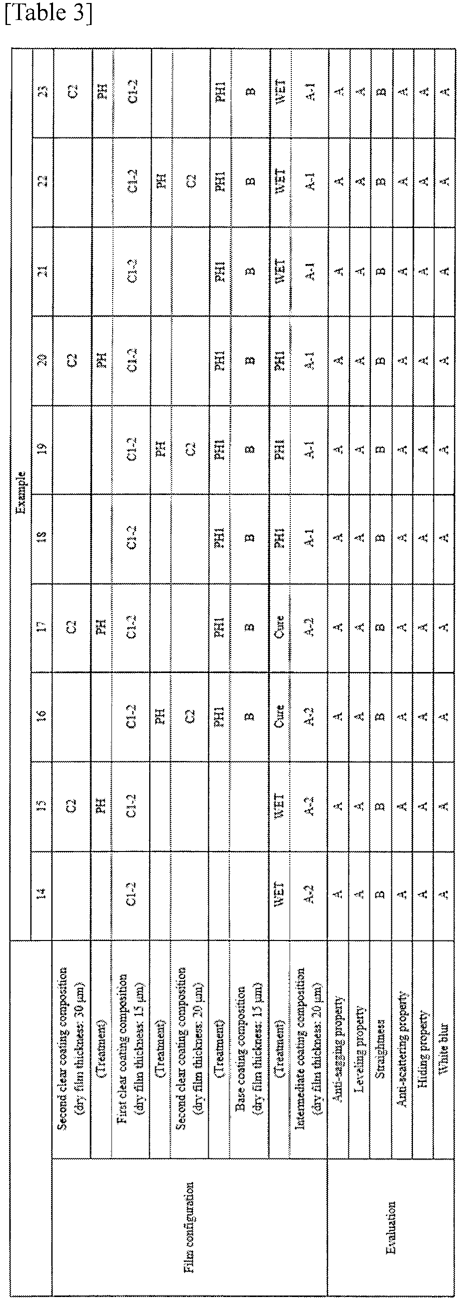

### [Example 24]

A multilayer coating film was formed in the same manner as in Example 2 except that the nozzle diameter was changed to 50 µm.

### [Example 25]

A multilayer coating film was formed in the same manner as in Example 2 except that the nozzle diameter was changed to 400 µm.

**[Table 4]**

| | | Example | |
|---|---|---|---|
| | | 24 | 25 |
| Nozzle diameter [µm] | | 50 | 400 |
| | Anti-sagging property | A | A |
| | Leveling property | A | A |
| Evaluation | Straightness | A | A |
| | Anti-scattering property | A | A |
| | Hiding property | A | A |
| | White blur | A | A |

### [Evaluation]

The multilayer coating films were evaluated as follows. The results are shown in Tables 2 to 4.

### (1) Anti-sagging property

A multilayer coating film obtained in the same manner as in Example 1 except that the first clear coating composition was vertically applied was visually observed and evaluated on the basis of the following criteria. When the rating is C or more, the first clear coating composition can be evaluated to be superior in anti-sagging property (sagging is inhibited).

### (Evaluation criteria)

A: No sagging
B: The rating is between A and C, and it is practically available.
C: A puddle of the coating composition was observed at the lower part, but it is practically available.
D: A puddle of the coating composition was observed at the lower part, and it is not suitable for practical use.

### (2) Leveling property

The multilayer coating films obtained in Examples were visually observed, and whether unevenness (streaks) extending in the scanning direction of the nozzle was leveled or not was evaluated on the basis of the following criteria. When the rating is C or more, the first clear coating composition can be evaluated to be superior in leveling property.

### (Evaluation criteria)

A: Unevenness cannot be confirmed.
B: The rating is between A and C, and it is practically available.
C: Unevenness can be confirmed when gazed, but it is practically available.
D: Unevenness formed immediately after application remains as it is, and it is not suitable for practical use.

### (3) Straightness

The multilayer coating films obtained in Examples were visually observed, and the presence or absence of a portion not coated (missing) was evaluated on the basis of the following criteria. When the rating is B or more, the first clear coating composition can be evaluated to be superior in straightness.

### (Evaluation criteria)

A: Missing cannot be confirmed.
B: Streaks considered to be caused by missing are observed, but it is practically available.
C: Clear missing can be confirmed, and it is not suitable for practical use.

### (4) Anti-scattering property

The multilayer coating films obtained in Examples were visually observed, and whether or not the first clear coating composition was scattered in portions other than the applied portion was evaluated on the basis of the following criteria. When the rating is B or more, the first clear coating composition can be evaluated to be superior in anti-scattering property (scattering is inhibited).

### (Evaluation criteria)

A: Scattering cannot be confirmed.
B: Scattering is observed at several points, but it can be practically used.
C: A large number of scatterings can be confirmed, and it is not suitable for practical use.

### (5) Hiding property

A hiding-chart (manufactured by Nippon Testpanel Co., Ltd.) in accordance with JIS K 5600-4-1 (b) was used. The first clear coating composition was applied by dispensing application on a 2 D 2 cm square monochrome checkered pattern of the hiding-chart such that a gradient of dry-film thickness is formed, and then heat-cured. Next, a coating film portion where the monochrome checkered pattern could not be seen through was visually determined, and the film thickness of the portion was measured. The measured film thickness was taken as the monochrome hiding film thickness. From the obtained monochrome hiding film thickness, the hiding property of the colored clear coating film was evaluated on the basis of the following evaluation criteria. When the rating is A, the colored clear coating film can be evaluated to be excellent in hiding property.

### (Evaluation criteria)

A: The monochrome hiding film thickness is 13 µm or less.
B: The monochrome hiding film thickness is more than 13 µm.

### (6) White blur

The multilayer coating films obtained in Examples were visually observed, and white blur (cloudiness) of the coating films was evaluated. Evaluation was performed using a reference colored clear coating film prepared from the first clear coating composition (c1-1) as a basis for comparison. Since the first clear coating composition (c1-1) contains no viscosity agent, white blur is less likely to occur in the resulting colored clear coating film. When the rating is B or more, the colored clear coating film can be evaluated to be less prone to white blur.

### (Evaluation criteria)

A: It is equivalent to the reference colored clear coating film, and can be evaluated to have no white blur.
B: White blur is observed more as compared with the reference colored clear coating film when gazed, but it is practically available.
C: White blur can be clearly confirmed as compared with the reference colored clear coating film, and it is not suitable for practical use.

### INDUSTRIAL APPLICABILITY

According to the method of the present invention, it is possible to obtain, by using dispensing application, a multilayer coating film with occurrence of sagging inhibited. The method of the present disclosure is particularly suitable for painting of automobiles.

This application claims priority based on Japanese Patent Application No. 2023-221531, which was filed in Japan on December 27, 2023, the disclosure of which application is incorporated herein by reference in its entirety.

### REFERENCE SIGNS LIST

- 10, 10A to 10D: Multilayer coating film
- 11: Article to be coated
- 12: Intermediate coating film
- 13: Colored first clear coating film (colored clear coating film)
- 14: Second clear coating film
- 15: Base coating film

## Claims

1. A method for forming a multilayer coating film, comprising:
applying a thermally curable intermediate coating composition (A) onto an article to be coated;
applying a thermally curable and colored first clear coating composition (C1) using a dispenser after applying the intermediate coating composition (A);
heat-curing the intermediate coating composition (A) to obtain an intermediate coating film; and
heat-curing the first clear coating composition (C1) to obtain a colored first clear coating film,
wherein the first clear coating composition (C1) is a solvent-based composition, and has a low-shear viscosity LSV of 1 Pa•s or more and 40 Pa•s or less as measured at a temperature of 23°C and a shear rate of 0.1 sec-1.

2. The method for forming a multilayer coating film according to claim 1, wherein
the first clear coating composition (C1) is applied before the intermediate coating composition (A) is heat-cured, and
heat-curing of the intermediate coating composition (A) and heat-curing of the first clear coating composition (C1) are conducted at a time.

3. The method for forming a multilayer coating film according to claim 1, wherein
the intermediate coating composition (A) is heat-cured to afford an intermediate coating film, and
then the application of the first clear coating composition (C1) is conducted.

4. The method for forming a multilayer coating film according to any one of claims 1 to 3, further comprising:
applying a water-borne base coating composition (B) after applying the intermediate coating composition (A) and before applying the first clear coating composition (C1); and
heat-curing the water-borne base coating composition (B) to obtain a base coating film.

5. The method for forming a multilayer coating film according to any one of claims 1 to 4, further comprising:
applying a water-borne base coating composition (B) after applying the intermediate coating composition (A) and before applying the first clear coating composition (C1);
applying a second clear coating composition (C2) after applying the water-borne base coating composition (B) and before applying the first clear coating composition (C1); and
heat-curing the second clear coating composition (C2) to obtain a second clear coating film.

6. The method for forming a multilayer coating film according to any one of claims 1 to 4, further comprising:
applying a second clear coating composition (C2) after applying the first clear coating composition (C1); and
heat-curing the second clear coating composition (C2) to obtain a second clear coating film.

7. The method for forming a multilayer coating film according to any one of claims 1 to 6, wherein the first clear coating composition (C1) has a high-shear viscosity HSV of 0.009 Pa•s or more and 0.40 Pa•s or less as measured at a temperature of 23°C and a shear rate of 1000 sec⁻¹.

8. The method for forming a multilayer coating film according to any one of claims 1 to 7, wherein the first clear coating composition (C1) has a solid content concentration of 20% by mass or more and 60% by mass or less.

9. The method for forming a multilayer coating film according to any one of claims 1 to 8, wherein a reduction rate of the solid content concentration attained after a lapse of 60 seconds from the application of the first clear coating composition (C1) is 10% by mass or less with respect to the solid content concentration of the first clear coating composition (C1).

10. The method for forming a multilayer coating film according to any one of claims 1 to 9, wherein the dispenser has a nozzle having a diameter of 50 µm or more and 400 µm or less.

11. The method for forming a multilayer coating film according to any one of claims 1 to 10, wherein the first clear coating composition (C1) comprises at least one selected from the group consisting of a coloring pigment, a glitter pigment, and a dye.

12. The method for forming a multilayer coating film according to any one of claims 1 to 11, wherein the first clear coating composition (C1) comprises at least one selected from the group consisting of a polyamide-based viscosity agent, a cellulose-based viscosity agent, a polyolefin-based viscosity agent, a polyurea-based viscosity agent, and an organic resin microparticle viscosity agent.
